# Europäisches Patentamt

# European Patent Office

# Office européen des brevets

(19)

(11) Numéro de publication: **0 159 263**
**B1**

(12) ## FASCICULE DE BREVET EUROPÉEN

(45) Date de publication du fascicule du brevet: **08.06.88**

(51) Int. Cl.⁴: **G 01 F 23/24**

(21) Numéro de dépôt: **85400664.0**

(22) Date de dépôt: **03.04.85**

---

(54) Procédé et dispositif de contrôle de niveau de liquide dans un réservoir.

---

(30) Priorité: **03.04.84 FR 8405211**

(43) Date de publication de la demande:
**23.10.85 Bulletin 85/43**

(45) Mention de la délivrance du brevet:
**08.06.88 Bulletin 88/23**

(84) Etats contractants désignés:
**BE CH DE GB IT LI NL SE**

(56) Documents cité:
**EP-A-0 029 091**
**FR-A-1 396 688**
**FR-A-2 512 201**
**GB-A-2 042 737**
**GB-A-2 107 883**
**US-A-3 283 576**

(73) Titulaire: **REGIE NATIONALE DES USINES
RENAULT, Boîte postale 103 8-10 avenue Emile
Zola, F-92109 Boulogne- Billancourt (FR)**

(72) Inventeur: **Brisset, Pierre, 68, rue Jean- Pierre
Timbaud, F-75011 Paris (FR)**
Inventeur: **Warenghem, Michel, 8, avenue de
l'Abbé- St- Pierre, F-92150 Suresnes (FR)**
Inventeur: **Wiart, Patrice, Résidence Marcel
Sembat Rue Edouard Vaillant, F-92800 Puteaux
(FR)**

(74) Mandataire: **Ancel, Roger, R.N.U.R. S.0804 B.P. 103
8 & 10, avenue Emile Zola, F-92109 Boulogne-
Billancourt (FR)**

EP 0 159 263 B1

LIBER, STOCKHOLM 1988

## Description

La présente invention est relative à un procédé et un dispositif de contrôle de niveau d'un liquide dans un réservoir, du type utilisant la variation, en fonction de la température, de la résistance d'un élément résistif à coefficient de température élevé.

Un tel dispositif utilise la différence de conduction thermique entre un environnement gazeux et un environnement liquide. Lorsqu'un élément conducteur électrique à fort coefficient de température est parcouru par un courant, il s'échauffe. Cet échauffement est plus ou moins grand suivant que le conducteur électrique est plus ou moins immergé dans le liquide, car la partie de l'élément qui se trouve exposée à l'air est bien moins refroidie que la partie immergée. La résistance de l'élément étant fonction de sa température, on peut déduire le niveau de liquide de la valeur de cette résistance.

Les dispositifs de ce type étant très sensibles à la température ambiante, il est impératif d'apporter des corrections tenant compte de celle-ci, notamment dans le cas d'une utilisation sur véhicule automobile où l'on rencontre des variations importantes de cette température.

De nombreux dispositifs font appel à des composants extérieurs pour compenser ces variations, mais leur complexité est incompatible avec une fabrication en grande série à faible coût.

Le brevet FR-A-2 367 276 tente d'apporter une solution à ce problème au moyen d'un dispositif comprenant un élément résistif placé dans le liquide dont la présence est à détecter et un circuit électronique injectant un courant d'intensité constante prédéterminée dans l'élément. La comparaison entre la tension initiale apparaissant lors de l'établissement du courant et la tension finale au haut d'un temps prédéterminé mesurées aux bornes de l'élément est utilisée pour fournir une indication du niveau de liquide.

Ce dispositif a l'avantage de n'utiliser qu'un seul élément résistif mais les indications qu'il fournit sont malheureusement toujours fortement tributaires de la température ambiante.

Le brevet FR-A-2 514 497 décrit des perfectionnements au brevet précité qui ont pour but d'assurer une mesure continue et précise de niveau dans des gammes de température plus larges. Les solutions décrites ont cependant l'inconvénient de faire subir à l'élément résistif ou sonde des échauffements excessifs dans le cas de températures élevées et, pour certaines, de recourir à l'emploi de composants additionnels.

Le brevet EP-A-00 29 091 concerne un dispositif de mesure de niveau d'un liquide dans un réservoir, à partir d'une résistance dépendant de la température. Cette résistance peut être composée de deux parties: une partie dite inférieure plongée toujours dans le liquide dont le niveau est à mesurer et une partie dite supérieure, dont la longueur est comprise entre les hauteurs minimale et maximale du niveau du liquide. Cette résistance est connectée à une source de courant constant, par l'intermédiaire d'un interrupteur, commandé par une horloge. Le dispositif de mesure de niveau effectue la différence de tension mesurée d'une part à un instant initial et correspondant à la température initiale du liquide et d'autre part à un instant suivant déterminé après échauffement de la résistance. Cette différence de tension $\Delta V$ varie en fonction de la température ambiante, inconvénient que permet de résoudre l'invention décrite dans la demande.

La présente invention vise à fournir un procédé et un dispositif du type précité qui permettent la mesure précise d'un niveau de liquide dans une large gamme de températures ambiantes, tout en ne nécessitant qu'un seul élément résistif et en évitant tout échauffement excessif de ce dernier.

A cet effet, l'invention a pour objet un procédé tel que décrit dant la revendication 1.

Suivant un premier aspect de l'invention, on mesure la tension finale $V_m$ engendrée par le courant de mesure $I_{o\,corr}$ au bout d'une période de temps constante prédéterminée $t_m$, et on détermine le niveau de liquide par comparaison entre les valeurs de la tension finale $V_m$ et de la tension initiale $V_o$, $V'_o$.

Suivant un autre aspect de l'invention, on mesure la tension initiale $V'_o$ engendrée aux bornes de l'élément au moment de l'établissement du courant de mesure $I_{o\,corr}$, on ajoute à ladite tension initiale $V'_o$ un seuil de tension $\Delta V$ de valeur prédéterminée, on compare en permanence la somme $V'_o + \Delta V$ desdites tensions à la tension instantanée engendrée aux bornes de l'élément par le courant de mesure $I_{o\,corr}$, on mesure la période de temps $\Delta T$ qui s'écoule entre l'instant de mesure de la tension initiale $V'_o$ et celui où ladite tension instantanée devient égale à ladite somme, et on déduit le niveau de liquide de ladite période de temps mesurée $\Delta T$.

L'invention a également pour objet un dispositif selon la revendication 4, pour la mise en oeuvre du procédé défini ci-dessus.

D'autres caractéristiques et avantages de l'invention ressortiront de la description qui va suivre de plusieurs modes de sa réalisation donnés uniquement à titre d'exemple et illustrés par les dessins annexés sur lesquels

- la figure 1 est un graphique montrant, pour différentes températures ambiantes et un même niveau de liquide, l'évolution en fonction du temps de la tension aux bornes d'un element résistif alimenté par un courant d'intensite constante prédéterminée ;

- la figure 2 est un schéma bloc d'un dispositif suivant un premier mode de réalisation

- la figure 3 est un organigramme illustrant le fonctionnement du dispositif de la figure 2 ;

- la figure 4 est un schéma bloc d'un dispositif suivant un deuxième mode de réalisation ,

- la figure 5 est un schéma bloc d'un dispositif suivant un troisième mode de réalisation.

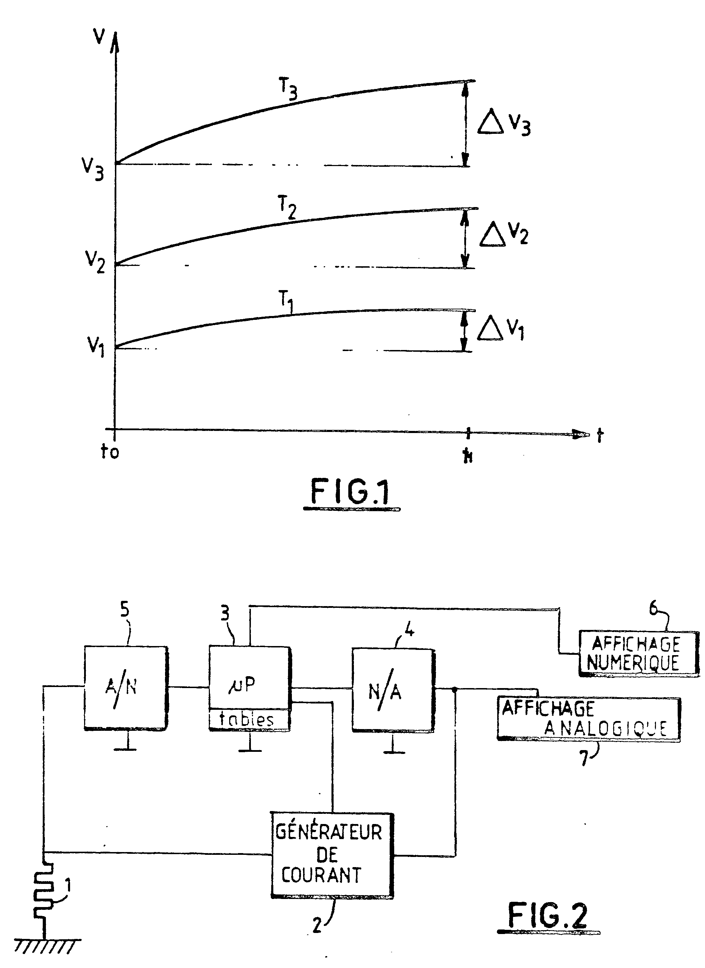

La figure 1 illustre le fonctionnement d'une sonde de niveau conforme au brevet FR 2 367 276. Lorsqu'on injecte un courant $I$ d'intensité prédéterminée dans un élément résistif à fort coefficient de température positif immergé sur une hauteur $\underline{h}$ dans un liquide dont il convient de détecter le niveau, il apparaît initialement à ses bornes une tension V. Cependant, comme le montre la figure 1, cette tension initiale V au temps $t_0$ dépend de la température du milieu environnant l'élément résistif: elle peut ainsi prendre des valeurs $V_1$, $V_2$ ou $V_3$ pour des températures ambiantes $T_1$, $T_2$, $T_3$ telles que $T_1 < T_2 < T_3$. Etant donné que l'évolution de la résistance en fonction de la température d'un tel élément n'est pas linéaire, on constate que, pour une même hauteur $\underline{h}$ d'immersion, la différence $\Delta$ V entre la tension aux bornes de l'élément résistif à l'instant $t_1$ et à l'instant $t_0$ n'est pas constante: suivant la température ambiante, on recueille des valeurs $\Delta V_1$, $\Delta V_2$ ou $V_3$ qui, traduites en niveau de liquide, font que la mesure de niveau est d'autant plus erronée que l'on s'écarte d'une température nominale prédéterminée.

La figure 2 montre un dispositif qui permet de mesurer avec une bonne précision le niveau d'un liquide à différentes températures ambiantes. Ce dispositif comprend un élément résistif à coefficient de température positif 1, ci-après appelé sonde, immergé dans le liquide dont on veut mesurer le niveau. La sonde 1 est alimentée par un générateur de courant 2 commandé en tension par un microprocesseur 3 par l'intermédiaire d'un convertisseur numérique/analogique 4 et piloté par ce même microprocesseur. Ce dernier lit la tension aux bornes de la sonde 1 par l'intermédiaire d'un convertisseur analogique/numérique 5 et commande un module d'affichage numérique 6 ou analogique 7.

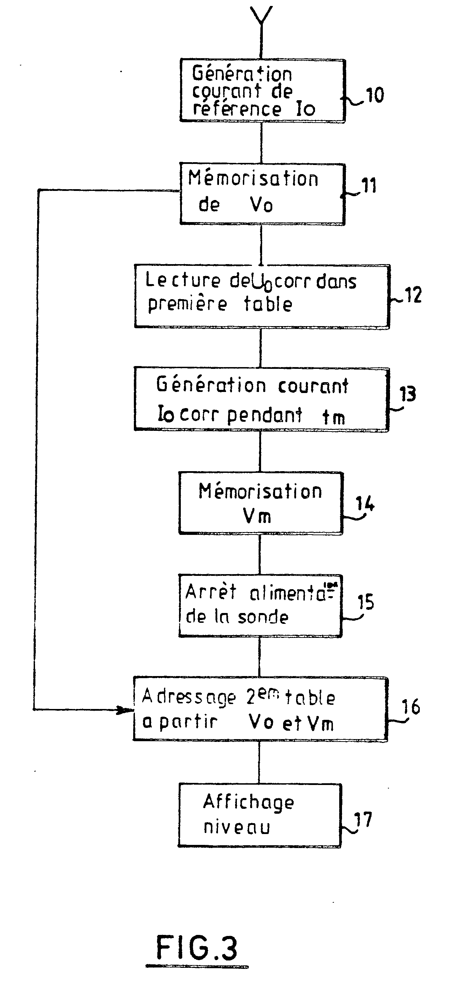

Le fonctionnement de ce dispositif sera maintenant décrit en se reportant également à la figure 3 qui est un organigramme illustrant le fonctionnement du microprocesseur 3. Après réception d'une commande appropriée, le microprocesseur 3 transmet une information numérique convertie par le convertisseur numérique/ analogique 4 sous forme d'une tension $U_0$.

Cette tension est appliquée au générateur de courant commandé en tension 2 qui engendre un courant de référence $I_0$ (étape 10). L'intensité et la durée très courte de ce courant $I_0$ sont contrôlées par le microprocesseur 3 de façon à ne provoquer au niveau de la sonde 1 qu'un échauffement négligeable. Il apparaît donc aux bornes de la sonde 1 une impulsion de tension d'amplitude $V_0$ et de très courte durée qui est une image de la température du milieu dans lequel la sonde 1 est plongée. Cette tension $V_0$ est convertie par le convertisseur analogique/numérique 5 et mise en mémoire dans le microprocesseur 3 (étape 11).

Cette donnée est utilisée comme référence pour adresser une première table mémorisée dans le microprocesseur 3 et dans laquelle, à chaque valeur de $V_0$ correspond une autre valeur $U_{0\ corr}$ déterminée expérimentalement pour maintenir constants les $\Delta$ V de la figure 1, pour un temps de mesure prédéterminé et un niveau à mesurer identique h (étape 12). Cette information $U_{0\ corr}$ est transmise par l'intermédiaire du convertisseur numérique/analogique 4 au générateur 2 qui engendre un courant constant $I_{0\ corr}$ pendant une période de temps constante prédéterminée $t_m$ programmée par le microprocesseur 3 (étape 13).

La tension initiale $V'_0$ apparaissant aux bornes de la sonde 1 au moment de l'établissement du courant $I_{0\ corr}$ dans la sonde 1 est, comme la tension $V_0$, une image de la température du milieu environnant et n'a pas lieu d'être mémorisée. Au bout du temps $t_m$, le microprocesseur 3 mémorise la tension $V_m$ recueillie aux bornes de la sonde et convertie sous forme numérique par le convertisseur 5 (étape 14) et l'alimentation de la sonde est interrompue (étape 15). L'information niveau de liquide est ensuite élaborée par le microprocesseur en fonction de $V_0$ et $V_m$ par adressage d'une deuxième table dont les valeurs mémorisées dans le microprocesseur ont été déterminées expérimentalement (étape 16). Cette information niveau est alors affichée sur le module 6 ou 7 (étape 17).

En résumé , avec le dispositif décrit le courant $I_{0\ corr}$ est choisi par le microprocesseur 3 en fonction de la température du milieu environnant représentée par la tension $V_0$ de manière telle que, pour un niveau de liquide donné, la valeur de $\Delta$ V (différence entre $V_m$ et $V_0$) soit indépendante de cette température. On remarquera que, dans l'organigramme de la figure 3, on pourrait calculer cette valeur $\Delta$ V et adresser la deuxième table en fonction de cette valeur à l'étape 16. En variante, les mêmes calculs pourraient être effectués en mémorisant $V'_0$ au lieu de $V_0$.

Trois avantages principaux ressortent du procédé de correction en température par variation du courant injecté dans la sonde tel que décrit ci-dessus :

- le premier est que la sonde ne subit pas des échauffements excessifs, car les puissances mises en jeu sont très peu différentes en fonction de la température, ce qui permet d'augmenter sa durée de vie de façon appréciable ;

- le deuxième est qu'il permet une certaine dispersion sur la valeur nominale de la résistance de la sonde si la valeur nominale est plus grande, la tension $V_0$ le sera aussi et le courant injecté $I_{0\ corr}$ sera plus faible, d'où une compensation simple sur le résultat de la mesure de niveau. Si la valeur nominale est plus petite, le phénomène inverse assure également une compensation. Des tolérances moins sévères sur la valeur nominale de la résistance de la sonde peuvent en outre conduire à des économies de fabrication.

- Le troisième est qu'il permet de diminuer la dynamique du signal aux bornes de la sonde, tout en gardant les mêmes variations de la mesure de niveau. Ceci peut s'avérer utile dans le cas où la tension disponible de la source d'alimentation s'avère limitée.

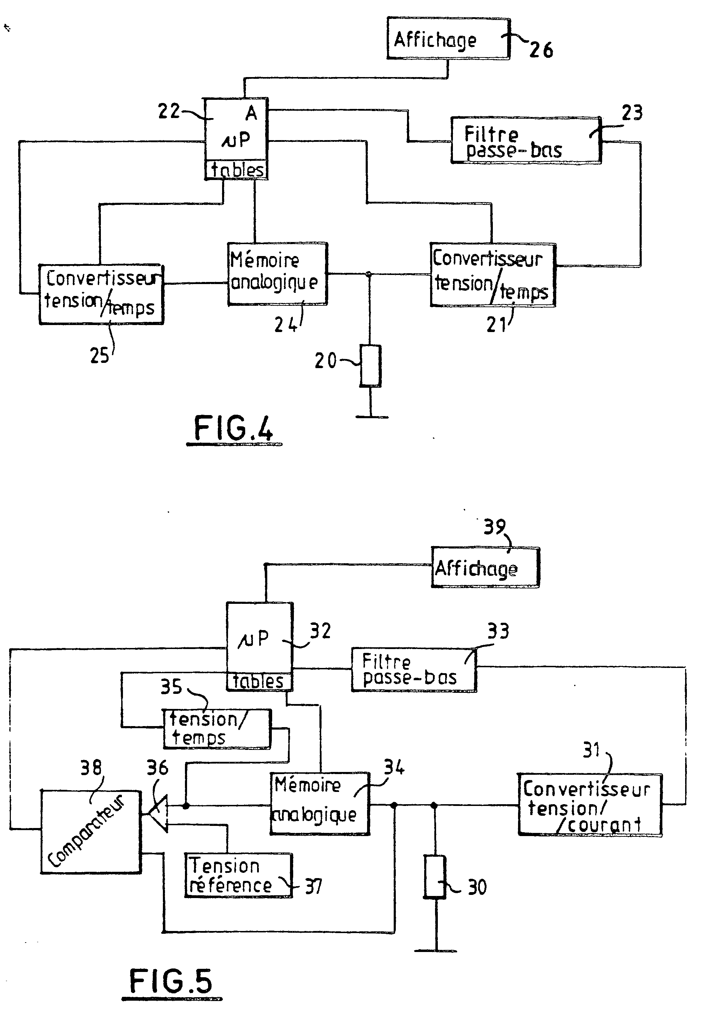

La figure 4 représente un second mode de réalisation qui présente la particularité de n'utiliser qu'un microprocesseur associé à des circuits analogiques classiques. Le dispositif comprend une sonde 20 alimentée en courant par un convertisseur tension/courant 21 commandé en tension par un microprocesseur 22 par l'intermédiaire d'un filtre passe-bas 23 et piloté par ce même microprocesseur. Une mémoire analogique 24 commandée par le microprocesseur 22 et connectée à la sonde 20 permet de stocker la tension présente aux bornes de la sonde, et la sortie de la mémoire analogique est reliée au microprocesseur 22 par l'intermédiaire d'un convertisseur tension/temps 25 également commandé par le microprocesseur. Ce dernier pilote enfin un module d'affichage 26.

En fonctionnement, lorsqu'il reçoit une commande appropriée, le microprocesseur 22 génère sur sa sortie A un signal de référence rectangulaire ayant un rapport cyclique prédéterminé. Ce signal est filtré par le filtre passe-bas 23 pour donner à sa sortie une tension continue $U_o$ qui est appliquée à l'entrée du convertisseur tension/courant. Le microprocesseur 22 envoie une impulsion de commande de mise en service du convertisseur 21 lorsque la tension $U_o$, valeur moyenne du signal de référence, est stable. Cette impulsion de commande est très courte de façon à n'envoyer du courant dans la sonde 20 que pendant un temps très bref et à ne provoquer qu'un échauffement négligeable de celle-ci. Ce courant $I_o$ généré par le convertisseur tension/courant 21 fait apparaître aux bornes de la sonde une tension $V_o$ qui est stockée dans la mémoire analogique 24. Le convertisseur tension/temps 25 convertit $V_o$ en un temps $T_o$ qui est mémorisé dans le microprocesseur 22.

Ce temps $T_o$ sert à adresser une première table de correction mémorisée dans le microprocesseur et dans laquelle à chaque temps $T_o$ correspond un rapport cyclique. Après adressage de cette première table, le microprocesseur 22 engendre donc à sa sortie A un signal ayant un certain rapport cyclique qui, après traitement par le filtre passe-bas 23, donne une tension $U_{o\,corr}$ elle-même convertie par le convertisseur 21 en un courant constant $I_{o\,corr}$ permettant la compensation en température décrite précédemment. Au bout du temps constant de mesure $t_m$, le microprocesseur 22 commande le convertisseur 21 pour interrompre l'alimentation en courant de la sonde 20 et la tension $V_m$ présente aux bornes de celle-ci et stockée dans la mémoire analogique 24 est convertie par le convertisseur 25 en un temps $T_m$ mémorisé par le microprocesseur.

Les informations $T_o$ et $T_m$ servent à adresser une deuxième table mémorisée dans le microprocesseur 22 et délivrant l'information niveau qui est transmise au module d'affichage 26.

La figure 5 montre un troisième mode de réalisation dans lequel le courant circulant dans la sonde s'obtient de la même manière qu'avec le dispositif de la figure 4. Ce dispositif comprend donc une sonde 30 alimentée en courant par un convertisseur tension/ courant 31 commandé en tension par un microprocesseur 32 par l'intermédiaire d'un filtre passe-bas 33 et piloté par ce même microprocesseur. Une mémoire analogique 34 connectée aux bornes de la sonde 30 est reliée, d'une part, au microprocesseur 32 par l'intermédiaire d'un convertisseur tension/temps 35 et, d'autre part, a une entrée d'un sommateur de tension 36. Ce sommateur reçoit sur une autre entrée une tension de référence d'un générateur 37 et applique la somme de ces tensions à une entrée d'un comparateur 38 dont l'autre entrée est connectée à la borne de mesure de tension de la sonde 30. Enfin, le microprocesseur commande un module d'affichage 39.

En fonctionnement, les courants $I_o$ et $I_{o\,corr}$ sont obtenus comme décrit à la figure 4 au moyen du microprocesseur 32, du filtre passe-bas 33, du convertisseur tension-courant 31, de la mémoire analogique 34 et du convertisseur tension/temps 35. Au moment de l'établissement du courant $I_{o\,corr}$ dans la sonde 30, la tension $V'_o$ apparaissant aux bornes de celle-ci est stockée dans la mémoire analogique 34. Cette tension ajoutée à la tension de référence $\Delta V$ du générateur 37 dans le sommateur 36 est comparée en permanence à la tension présente aux bornes de la sonde 30 pendant son échauffement sous l'effet du courant $I_{o\,corr}$. Le microprocesseur 32 mesure au moyen de son horloge interne le temps $\Delta T$ qui s'écoule entre l'instant d'apparition de la tension $V'_o$ et celui où la tension instantanée aux bornes de la sonde dépasse la tension $V'_o + \Delta V$ appliquée à la première entrée du comparateur 38 par le sommateur 36, instants qui se traduisent chacun par le basculement de la sortie du comparateur 38. Ce temps $\Delta T$ sert à adresser une deuxième table fournissant une mesure du niveau de liquide qui est affichée par le module 39. En outre, dès l'égalisation des deux tensions à l'entrée du comparateur 38, le microprocesseur 32 interrompt l'alimentation de la sonde 30.

On notera que le comparateur 38 peut aisément servir de convertisseur tension/temps par multiplexage des différents signaux.

Dans les modes de réalisation des figures 4 et 5, le filtre passe-bas joue un rôle très important. Pour des sensibilités identiques, en l'absence de filtre, les valeurs crêtes du signal rectangulaire affecteraient considérablement la durée de vie de la sonde, car cette dernière recevrait des courants et des tensions impulsionnels très importants. D'autre part, pour les applications à des véhicules automobiles, les excursions de

tension sont rapidement limitées par les tensions d'alimentation disponibles. Il est donc préférable de travailler en tension et courant continus pour ces deux raisons, ce qui conduit à l'utilisation d'un filtre passe-bas. Les dispositifs des figures 4 et 5 présentent les mêmes avantages que le mode de réalisation de la figure 2, mais la variante de la figure 5 a pour avantage supplémentaire de limiter la puissance maximale dissipée par la sonde en effet, alors que dans le cas des figures 2 et 4 la sonde est alimentée pendant un temps prédéterminé $t_m$, dans celui de la figure 5 le temps de mesure est d'autant plus court que l'échauffement est plus important, c'est-à-dire que le niveau de liquide est faible, puisque le seuil de comparaison $\Delta V$ est constant.

En résumé, l'un des points essentiels de l'invention réside dans le fait que l'on mesure la tension $V_0$ engendrée aux bornes de la sonde par un courant de référence d'intensité $I_0$ et de durée prédéterminées suffisamment faibles pour ne provoquer qu'un échauffement négligeable de la sonde. Ainsi, la tension $V_0$ est une image de la température du milieu environnant la sonde. On choisit alors en fonction de la tension $V_0$ mesurée un courant de mesure dont l'intensité $I_{o\ corr}$ déterminée expérimentalement est telle que la différence entre la tension engendrée aux bornes de la sonde par le courant $I_{o\ corr}$ à chaque instant et la tension $V_0$ est sensiblement indépendante de $V_0$, c'est-à-dire de la température du milieu environnant la sonde, et ne dépend que du niveau de liquide. Ce courant $I_{o\ corr}$ correspond très sensiblement à l'application d'une puissance constante aux bornes de la sonde quelle que soit la température. Ce procédé est particulièrement approprié à la détection du niveau d'huile des moteurs à combustion interne.

## Revendications

1. Procédé de contrôle du niveau de liquide contenu dans un réservoir utilisant la variation, en fonction de la température, de la résistance d'un élément résistif à coefficient de température élevé, immergé dans le liquide dont on veut mesurer le niveau, dans lequel on fait passer une impulsion de courant de référence d'intensité $I_0$ et de durée prédéterminées suffisamment faibles pour ne provoquer qu'un échauffement négligeable de l'élément et pour lequel on mesure la tension initiale $V_0$ engendrée aux bornes de l'élément par le courant de référence $I_0$ caractérisé en ce qu'ensuite :

- on fait passer dans l'élément un courant de mesure $I_{o\ corr}$ dont l'intensité constante est une fonction de ladite tension $V_0$ telle que la différence entre la tension engendrée aux bornes de l'élément par le courant $I_{c\ corr}$ à chaque instant et ladite tension $V_0$ est sensiblement indépendante de ladite tension $V_0$, et

- on détermine le niveau de liquide à partir de la comparaison entre la tension finale $V_m$ engendrée aux bornes de l'élément par le courant $I_{o\ corr}$ à un instant donné $t_m$ et les valeurs de tension initiales $V_0$ ou $V'_0$ engendrées aux bornes de l'élément lors de l'établissement respectivement du courant de référence $I_0$ ou du courant de mesure $I_{o\ corr}$.

2. Procédé selon la revendication 1, caractérisé en ce qu'on mesure la tension finale $V_m$ engendrée par le courant de mesure $I_{o\ corr}$ au bout d'une période de temps constante prédéterminée $t_m$, et on détermine le niveau de liquide par comparaison entre les valeurs de la tension finale $V_m$ et des tensions initiales $V_0$ ou $V'_0$.

3. Procédé selon la revendication 1, caractérisé en ce qu'on mesure la tension initiale $V'_0$ engendrée aux bornes de l'élément au moment de l'établissement du courant de mesure $I_{o\ corr}$, on ajoute à ladite tension initiale $V'_0$ un seuil de tension $\Delta V$ de valeur prédéterminée, on compare en permanence la somme $V'_0 + \Delta V$ desdites tensions à la tension instantanée engendrée aux bornes de l'élément par le courant de mesure $I_{o\ corr}$, on mesure la période de temps $\Delta T$ qui s'écoule entre l'instant de mesure de la tension initiale $V'_0$ et celui où ladite tension instantanée devient égale à ladite somme, et on déduit le niveau de liquide de ladite période de temps mesurée $\Delta T$.

4. Dispositif pour la mise en oeuvre du procédé selon l'une quelconque des revendications 1 à 3, comprenant un élément résistif (1 ; 20 ; 30) à coefficient de température élevé, des moyens (2, 4 ; 21, 23 ; 31, 33) de génération de courant constant $I_0$ ou $I_{o\ corr}$ pour alimenter ledit élément, des moyens (5 ; 24, 25 ; 34, 35) de mesure de la tension $V_0$; $V'_0$ ou $V_m$ aux bornes de l'élément résistif (1 ; 20 ; 30), et des moyens (3 ; 22 ; 32) de commande et de calcul de niveau de liquide associés aux moyens de génération de courant et de mesure de tension, caractérisé en ce que les moyens de commande et de calcul sont constitués par un microprocesseur (3 ; 22 ; 32) comprenant en mémoire une première table de correspondance entre les tensions $V_0$ et $V'_0$ engendrée respectivement par un courant de référence $I_0$ et un courant de mesure $I_{o\ corr}$ et une deuxième table de correspondance entre le résultat de la comparaison de la tension $V_m$ engendrée par $I_{o\ corr}$ à un instant donné $(t_m)$ avec les tensions initiales $V_0$, $V'_0$ et le niveau de liquide.

5. Dispositif selon la revendication 4, caractérisé en ce que les moyens de génération de courant comprennent un générateur de courant (2) commandé par le microprocesseur (3) par l'intermédiaire d'un convertisseur numérique/ analogique (4) et les moyens de mesure de tension comprennent un convertisseur analogique/numérique entre l'élément (1) et le microprocesseur (3).

6. Dispositif selon la revendication 4, caractérisé en ce que les moyens de génération de courant comprennent un filtre passe-bas (23 ;

33) produisant une tension continue à partir d'un signal rectangulaire émis par le microprocesseur (22 ; 32) avec un rapport cyclique déterminé, et un convertisseur tension/courant (21 ; 31) connecté entre le filtre passe-bas (23 ; 33) et l'élément (20 ; 30) et en ce que les moyens de mesure de tension comprennent une mémoire analogique (24 ; 34) et un convertisseur tension/temps (25 ; 35) connecté entre la mémoire analogique (24, 34) et le microprocesseur (22, 32).

7. Dispositif selon la revendication 6, caractérisé en ce que les moyens de mesure de tension comprennent un générateur de tension de référence (37), des moyens (36) de sommation de la tension ($\Delta$ V) du générateur de référence (37) avec la tension initiale $V'_o$ de l'élément (30) mémorisée par la mémoire analogique (34) au moment de l'établissement du courant de mesure $I_{o\ corr}$ dans l'élément (30), et des moyens (38) dont la sortie est connectée au microprocesseur (32) pour comparer la tension instantanée aux bornes de l'élément à ladite somme ($V'_o$ + $\Delta$ V).

**Patentansprüche**

1. Verfahren zur Kontrolle eines Flüssigkeitsstandes in einem Tank unter Verwendung der Veränderung der Temperatur eines Widerstandselementes mit erhöhtem Temperaturkoeffizienten als Funktion der Temperatur, das in die Flüssigkeit eintaucht, deren Stand gemessen werden soll und in dem man einen Referenz-Stromimpuls fließen läßt, der Intensität $I_o$ und vorgegebener Dauer, die ausreichend klein bemessen sind, um nur eine vernachlässigbare Erwärmung des Elementes zu erzeugen und wobei die an den Anschlüssen des Elementes durch den Referenzstrom $I_o$ erzeugte Anfangsspannung $V_o$ gemessen wird, gekennzeichnet durch die sich daran anschließenden Verfahrensschritte:
- man läßt in dem Element einen Meßstrom $I_{o\ corr}$ fließen, dessen konstante Intensität eine Funktion der Spannung $V_o$ derart ist, daß die Differenz zwischen der an den Anschlüssen des Elementes durch den Strom $I_{o\ corr}$ zu jedem Zeitpunkt erzeugten Spannung und der Spannung $V_o$ im wesentlichen unabhängig von der Spannung $V_o$ ist und
- man bestimmt den Flüssigkeitsstand ausgehend von einem Vergleich zwischen der an den Anschlüssen des Elementes durch den Strom $I_{o\ corr}$ zu jedem gegebenen Zeitpunkt $t_m$ erzeugten Endspannung $V_o$ und den Werten der Anfangsspannungen $V_o$ oder $V'_o$- die an den Anschlüssen des Elementes während des Fließens des Referenzstroms $I_o$ oder des Meßstromes $I_{o\ corr}$ erzeugt werden.

2. Verfahren nach Anspruch 1, dadurch gekennzeichnet, daß die durch den Meßstrom $I_{o\ corr}$ am Ende einer konstanten vorgegebenen Zeitdauer $t_m$ erzeugte Endspannung $V_m$ gemessen wird und daß der Flüssigkeitsstand durch Vergleich zwischen den Werten der Endspannung $V_m$ und den Anfangsspannungen $V_o$ oder $V'_o$ ermittelt wird.

3. Verfahren nach Anspruch 1, dadurch gekennzeichnet, daß die an den Anschlüssen des Elementes im Moment des Anlegens des Meßstromes $I_{o\ corr}$ erzeugte Anfangsspannung $V_o$ gemessen wird, daß dieser Anfangsspannung $V'_o$ ein Spannungsschwellwert $\Delta$ V eines vorgegebenen Wertes addiert wird, daß ständig die Summe $V'_o$ + $\Delta$ V dieser Spannungen mit der an den Anschlüssen des Elementes durch den Meßstrom erzeugten Augenblicksspannung verglichen wird, daß die Zeitdauer $\Delta$ T gemessen wird, die zwischen dem Meßzeitpunkt der Anfangsspannung $V'_o$ und demjenigen liegt zu dem die Augenblicksspannung gleich der genannten Summe wird und daß der Flüssigkeitsstand aus dieser gemessenen Zeitdauer $\Delta$ T abgeleitet wird.

4. Anordnung zur Durchführung des Verfahrens nach einem der Ansprüche 1 bis 3, mit einem Widerstandselement (1, 20, 30) mit erhöhtem Temperaturkoeffizienten mit einer Anordnung (2, 4, 21, 23, 31, 33) zur Stromerzeugung, um damit das Element zu versorgen, mit einer Anordnung (5, 24, 25, 34, 35) zur Messung der Spannung $V_o$, $V'_o$ oder $V_m$ an den Anschlüssen des Widerstandselements (1, 20, 30) und mit einer Anordnung (3, 22, 32) zur Steuerung und zur Berechnung des Flüssigkeitsstandes, die den Anordnungen zur Stromerzeugung und zur Spannungsmessung zugeordnet ist, dadurch gekennzeicnet, daß die Anordnung zur Steuerung und zur Berechnung aus einem Mikroprozessor (3, 22, 32) besteht, in dem eine erste Korrespondenztabelle gespeichert ist zwischen den Werten $V_o$ und $V'_o$, die von einem Referenzstrom $I_o$ bzw. einem Meßstrom $I_{o\ corr}$ erzeugt werden so wie eine zweite Korrespondenztabelle für das Resultat des Vergleichs zwischen der Spannung $V_m$, die zu einem gegebenen Zeitpunkt $t_m$ von $I_{o\ corr}$ erzeugt wird mit den Anfangsspannungen $V_o$, $V'_o$ sowie dem Flüssigkeitsstand.

5. Vorrichtung nach Anspruch 4, dadurch gekennzeichnet, daß die Anordnung zur Stromerzeugung einen Stromgenerator (2) aufweist, der vom Mikroprozessor (3) über einen Digital-Analog-Wandler (4) gesteuert wird und daß die Anordnung zur Spannungsmessung einen Analog-Digital-Wandler zwischen dem Element (1) und dem Mikroprozessor (3) aufweist.

6. Vorrichtung nach Anspruch 4, dadurch gekennzeichnet, daß die Anordnung zur Stromerzeugung ein Tiefpaßfilter (23, 33) aufweist, das eine kontinuierliche Spannung ausgehend von einem Rechtecksignal erzeugt, das vom Mikroprozessor (22, 32) stammt, mit einem zyklischen vorgegebenen Verhältnis sowie einen Spannungs-Strom-Wandler (21, 31) aufweist, der zwischen dem Tiefpaßfilter (23, 33) und dem Element (20, 30) geschaltet ist und daß die Anordnung zur Spannungsmessung einen

Analog-Speicher (24, 34) und einen Spannung-Zeit-Wandler (25, 35) aufweist, der zwischen dem Analog-Speicher (24, 34) und dem Mikroprozessor (22, 32) geschaltet ist.

7. Vorrichtung nach Anspruch 6, dadurch gekennzeichnet, daß die Anordnung zur Spannungsmessung einen Referenz-Spannungsgenerator (37) aufweist, eine Anordnung (36) zur Summierung der Spannung $\Delta$ V des Referenzgenerators (37) mit der Anfangsspannung $V'_0$ des Elementes (30), welche im Analog-Speicher (34) gespeichert ist zum Zeitpunkt des Anlegens des Meßstromes $I_{0\ corr}$ im Element (30) sowie eine Anordnung (38), deren Ausgang mit dem Mikroprozessor (32) verbunden ist, um die Augenblicksspannung an den Anschlüssen des Elementes mit dieser Summe ($V'_0 + \Delta$ V) zu vergleichen.

## Claims

1. A process for monitoring the level of liquid contained in a tank using the variation in dependence on temperature in the resistance of a resistive element which has a high temperature coefficient and which is immersed in the liquid, the level of which is to be measured, comprising passing a reference current pulse of predetermined strength $I_0$ and duration which are sufficiently low as to cause only negligible heating of the element and measuring the initial voltage $V_0$ produced at the terminals of the element by the reference current $I_0$, characterised by then:
- passing into the element a measurement current $I_{0\ corr}$ whose constant strength is dependent on said voltage $V_0$ such that the difference between the voltage generated at the terminals of the element by the cuurent $I_{0\ corr}$ at each moment and said voltage $V_0$ is substantially independent of said voltage $V_0$, and
- determining the level of liquid from the comparison between the final voltage $V_m$ generated at the terminals of the element by the current $I_{0\ corr}$ at a given time $t_m$ and the initial voltage values $V_0$ or $V'_0$ generated at the terminals of the element upon the respective establishment of the reference current $I_0$ or the measurement current $I_{0\ corr}$.

2. A process according to claim 1 characterised by measuring the final voltage $V_m$ generated by the measurreent current $I_{0\ corr}$ at the end of a predetermined constant period of time $t_m$, and determining the level of liquid by comparison between the values of the final voltage $V_m$ and the initial voltages $V_0$ or $V'_0$.

3. A process according to claim 1 characterised by measuring the initial voltage $V'_0$ generated at the terminals of the element at the moment at which the measurement current $I_{0\ corr}$ is established, adding to said initial voltage $V'_0$ a voltage threshold $\Delta$ V of predetermined value, permanently comparing the sum $V'_0 + \Delta$ V of said voltages to the instantaneous voltage generated at the terminals of the element by the mesurement current $I_{0\ corr}$, measuring the period of time $\Delta$ T which elapses between the moment of measuring the initial voltage $V'_0$ and that at which said instantaneous voltage becomes equal to said sum, and deducing the level of liquid from said measured period of time $\Delta$ T.

4. Apparatus for carrying out the process according to any one of claims 1 to 3 comprising a resistive element (1; 20; 30) with a high temperature coefficient, means (2, 4; 21, 23; 31, 33) generating a constant current $I_0$ or $I_{0\ corr}$ for feeding said element, means (5; 24, 25; 34, 35) for measuring the voltage ($V_0$; $V'_0$ or $V_m$) at the terminals of the resistive element (1; 20; 30) and liquid level computing and control means (3; 22; 32) associated with the current generating and voltage measuring means, characterised in that the computing and control means are formed by a microprocessor (3; 22; 32) comprising in its memory a first table of correspondence between the voltages $V_0$ and $V'_0$ respectively generated by a reference current $I_0$ and a measurement current $I_{0\ corr}$ and a second table of correspondance between the result of comparison of the voltage $V_m$ generated by $I_{0\ corr}$ at a given time ($t_m$) with the initial voltages $V_0$, $V'_0$ and the level of liquid.

5. Apparatus according to claim 4 characterised in that the current generating means comprise a current generator (2) controlled by the microprocessor (3) by way of a digital-analog converter (4) and the voltage measuring means comprise an analog-digital converter between the element (1) and the microprocessor (3).

6. Apparatus according to claim 4 characterised in that the current generating means comprise a low pass filter (23; 33) producing a dc voltage from a rectangular signal produced by the microprocessor (22; 32) with a given pulse duty factor, and a voltage-current converter (21; 31) connected between the low pass filter (23; 33) and the element (20, 30) and that the voltage measuring means comprise an analog memory (24; 34) and a voltage-time converter (25; 35) connected between the analog memory (24; 34) and the microprocessor (22, 32).

7. Apparatus according to claim 6 characterised in that the voltage measuring means comprise a reference voltage generator (37), means (36) for summing the voltage ($\Delta$ V) of the reference generator (37) with the initial voltage $V'_0$ of the element (30), which is stored in the analog memory (34) at the moment at which the measurement current $I_{0\ corr}$ is established in the element (30), and means (38) having the output thereof connected to the microprocessor (32) to compare the instantaneous voltage at the terminals of the element to said sum ($V'_0 + \Delta$ V).

FIG.1

FIG.2

Génération
courant de
référence Io — 10

Mémorisation
de Vo — 11

Lecture de $U_0$ corr dans
première table — 12

Génération courant
Io corr pendant tm — 13

Mémorisation
Vm — 14

Arrèt alimenta°
de la sonde — 15

Adressage $2^{em}$ table
a partir Vo et Vm — 16

Affichage
niveau — 17

# FIG.3

FIG.4

FIG.5